# EUROPÄISCHE PATENTANMELDUNG

(11) **EP 1 535 554 A1**
(43) Veröffentlichungstag der Anmeldung: **01.06.2005**
(21) Anmeldenummer: 04405683.6
(22) Anmeldetag: 08.11.2004
(51) Int. Cl.: A47J 31/40

(54) **Extraktionsvorrichtung von Kaffee für eine Kaffeemaschine**

(30) Priorität: 20.11.2003 EP 03405829
(71) Anmelder: Steiner AG Weggis, 6353 Weggis (CH)
(72) Erfinder: Comte, Philippe, 1976 Daillon (CH)
(74) Vertreter: Luchs, Willi

(57) **Zusammenfassung**

Eine Extraktionsvorrichtung zur Erzeugung von Kaffee für eine Kaffeemaschine ist mit einem Brühzylinder (2) für die Aufnahme von Kaffeepulver versehen, der in seiner Achsrichtung in Zusammenwirkung mit einer Antriebsvorrichtung (4) zwischen vorbestimmten Stellungen hin und her verstellbar ist. In diesem Brühzylinder (2) sind zwei koaxial relativ zueinander verstellbare Kolben (31, 32) geführt. Der Brühzylinder (2) weist einen Zylinderteil (20) auf und es ist ausserdem ein Zusatzteil (22) vorgesehen. Der Zusatzteil (22) ist verschiebbar an dem durch den ersten Kolben (31) verschliessbaren Ende des Brühzylinders (2) angeordnet und mit der Einfüllöffnung (24) zum Einfüllen des Kaffeepulvers versehen. Dadurch kann die Baulänge dieser Extraktionsvorrichtung gekürzt werden.

## Beschreibung

Die Erfindung betrifft eine Extraktionsvorrichtung zur Erzeugung von Kaffee für eine Kaffeemaschine gemäss dem Oberbegriff des nachfolgenden Anspruches 1.

Eine Extraktionsvorrichtung ist in der EP-B-0 299 399 offenbart. Sie umfasst einen in Zusammenwirkung mit einer Antriebsvorrichtung entlang einer Längsführung zwischen vorbestimmten Stellungen hin und her verstellbaren Brühzylinder zur Aufnahme von Kaffeepulver sowie zwei zum Brühzylinder koaxiale, relativ zueinander verstellbare Kolben. Das Kaffeepulver wird durch eine seitliche Einfüllöffnung des Brühzylinders eingefüllt, wobei ein stirnseitig offenes Ende des Brühzylinders durch einen der beiden Kolben, den im wesentlichen feststehenden ersten Kolben, geschlossen gehalten wird. Beim Verstellen des Brühzylinders in der einen Richtung, über den ersten Kolben, begrenzt der erste Kolben zusammen mit dem zweiten, mit dem Brühzylinder mitbewegten Kolben stirnseitig eine Brühkammer und sorgt für das Verdichten des eingefüllten Kaffeepulvers. In dieser Stellung wird durch den einen Kolben brühendes Wasser in die Brühkammer und durch den verdichteten Kaffeepulver gepumpt und danach der erzeugte Kaffee durch den anderen Kolben zu einem Auslass der Kaffeemaschine befördert. Beim anschliessenden Verstellen des Brühzylinders in der anderen Richtung wird das verbrauchte Kaffeepulver durch den zweiten Kolben aus dem inzwischen vom ersten Kolben freigegebenen Brühzylinder-Ende ausgestossen.

Bei einer anderen gattungsmässigen Vorrichtung nach der Druckschrift US-A-5,275,089 sind ebenfalls zwei zum Brühzylinder verstellbare Kolben und ein eine Einfüllöffnung zum Einfüllen des Kaffeepulvers versehener Block vorgesehen. Innenseitig dieses zylinderförmigen Blocks ist eine Hülse und der eine Kolben längsbeweglich angeordnet. In der Einfüllposition liegt dieser Block am andern Hülsenteil mit dem anderen Kolben stirnseitig an, hingegen in der Ausstossposition sind sie voneinander getrennt. In der Brühposition kommt der beim Zusatzteil befindliche Kolben innerhalb des Zylinderteils zu liegen. Aufgrund der Notwendigkeit dieser Hülse in dem Block und ihrer Verschiebbarkeit wie auch des in ihr zugeordneten Kolbens ist ein komplizierter Aufbau dieser Extraktionsvorrichtung gegeben.

Der vorliegenden Erfindung liegt die Aufgabe zugrunde, die an sich bewährte Extraktionsvorrichtung der eingangs genannten Art noch weiter zu verbessern und platzsparender zu gestalten.

Diese Aufgabe ist erfindungsgemäss durch eine Extraktionsvorrichtung mit den Merkmalen des Anspruches 1 gelöst.

Weitere bevorzugte Ausgestaltungen der erfindungsgemässen Extraktionsvorrichtung bilden den Gegenstand der abhängigen Ansprüche.

Mit der erfindungsgemässen Aufteilung in den Brühzylinder und in einen Zusatzteil, von denen der eine den eigentlichen, die Brühkammer umschliessenden und durch die Antriebsvorrichtung verstellbaren Brühzylinderteil bildet und der Zusatzteil an dem durch den ersten Kolben verschliessbaren Ende des Brühzylinders angeordnet und mit der Einfüllöffnung zum Einfüllen des Kaffeepulvers versehen ist, wobei die beiden Zylinderteile beim Verstellen des Brühzylinderteils in der einen Richtung stirnseitig aneinandergedrückt zusammenverstellt und beim Verstellen des Brühzylinderteils in der anderen Richtung voneinander getrennt werden können, so dass ein Axialspalt entsteht, durch welchen das verbrauchte Kaffeepulver herausfallen kann, kann die Länge des Brühzylinders sowie auch der zum Ausstossen des verbrauchten Kaffeepulvers notwendige Hub des zweiten Kolbens verkürzt werden, wodurch auch die Gesamtlänge der Extraktionsvorrichtung verkleinert wird.

Ausserdem wird der Ausstossvorgang verkürzt, und nicht zuletzt auch das Material für die verkürzten Teile eingespart. Zudem kann der die Einfüllöffnung aufweisende, am eigentlichen Brühvorgang unbeteiligte Zusatzteil aus einem billigeren Material wie Kunststoff und in einem einfacheren Verfahren hergestellt werden als der aus rostfreiem Stahl bestehende Brühzylinder, in dem nun keine seitliche Einfüllöffnung angefertigt werden muss.

Die Erfindung wird nachfolgend anhand der Zeichnung näher erläutert. Es zeigen:
- Fig. 1: ein Ausführungsbeispiel einer erfindungsgemässen Extraktionsvorrichtung für eine Kaffeemaschine in perspektivischer Darstellung;
- Fig. 2: einen Schnitt nach Linie II - II in Fig. 3;
- Fig. 3: im Längsschnitt die Extraktionsvorrichtung nach Fig. 1 in einer Ausgangsstellung;
- Fig. 4: im Längsschnitt die Extraktionsvorrichtung nach Fig. 1 in einer Brühposition;
- Fig. 5: im Längsschnitt die Extraktionsvorrichtung nach Fig. 1 in einer Ausstossposition,
- Fig. 6: ein weiteres Ausführungsbeispiel einer erfindungsgemässen Extraktionsvorrichtung in perspektivischer Darstellung, und
- Fig. 7: eine Ansicht des Ausführungsbeispiels nach Fig. 6, bei dem der zugehörige Halter weggelassen ist.

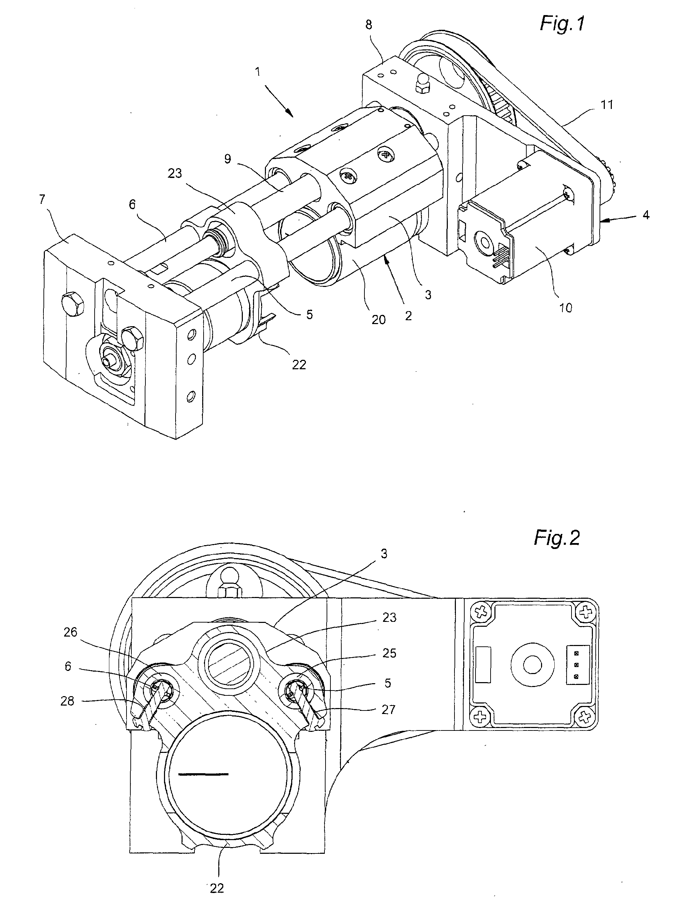

In Fig.1 bis 5 ist eine Extraktionsvorrichtung 1 zur Erzeugung von Kaffee dargestellt, die den Einsatz in einer automatischen Kaffeemaschine findet. Sie weist einen Brühzylinder 2 mit einem Zylinderteil 20 und einen axial mit diesem zusammenfügbaren zylindrischen Zusatzteil 22 auf, wie weiter unten ausführlich erläutert wird. Einer dieser Teile, der rohrförmige Brühzylinderteil 20 ist an einem Schlitten 3 befestigt und wird mit diesem in Zusammenwirkung mit einer Antriebsvorrichtung 4 in seiner Achsrichtung zwischen vorbestimmten Stellungen hin und her verstellt und dabei auf zwei Führungsstangen 5, 6 geführt. Die Führungsstangen 5, 6 sind mit ihren Enden in je einem Halter 7, 8 befestigt.

Die Antriebsvorrichtung 4 umfasst eine auf den Schlitten 3 einwirkende Antriebsspindel 9, die in den beiden Haltern 7, 8 drehbar gelagert ist, und die über einen Riemenantrieb 11 mit einem Antriebsmotor 10, vorzugsweise einem DC-Motor (Gleichstrommotor) in Antriebsverbindung steht. Die Achse der Antriebsspindel 9 liegt in einer Längsmittelebene der Extraktionsvorrichtung 1, die zwischen den beiden Führungsstangen 5, 6 verläuft.

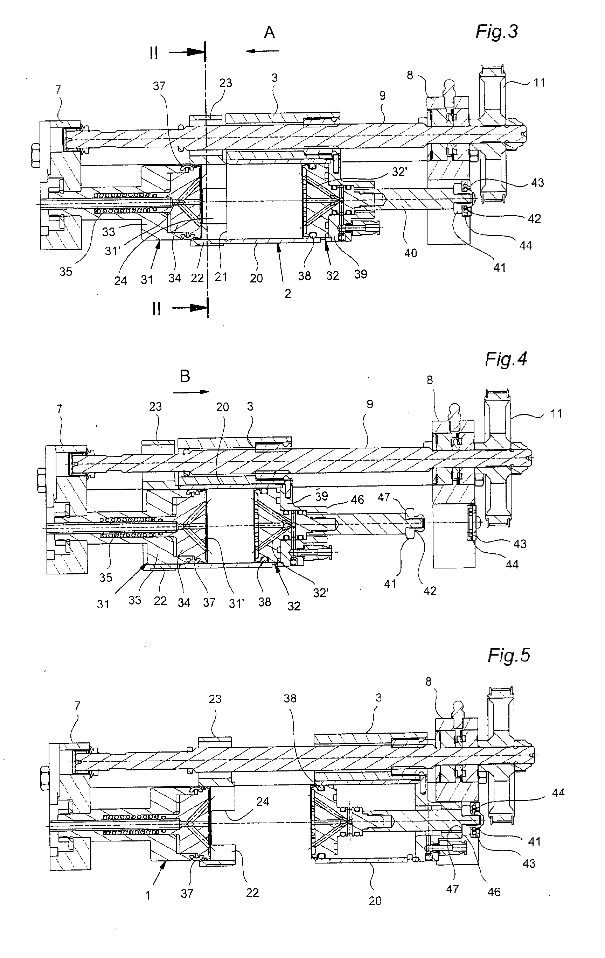

In der in Fig. 3 gezeigten Stellung des Schlittens 3 liegt an einem stirnseitig offenen Ende 21 des mit dem Schlitten 3 fest verbundenen Brühzylinderteils 20 der Zusatzteil 22 an, der mit einer seitlichen Einfüllöffnung 24 zum Einfüllen von Kaffeepulver in den Brühzylinder-Hohlraum versehen ist. Der Zusatzteil 22 ist mit einem Führungsteil 23 verbunden und mit diesem auf den Führungsstangen 5, 6 und lose auch über die Antriebsspindel 9 verschiebbar geführt (wird jedoch von der Antriebsspindel 9 nicht angetrieben). Auf den Führungsteil 23 wirken zwei in den Führungsstangen 5, 6 integrierte Federn 25, 26 (vgl. Fig. 2) ein, die den Führungsteil 23 an je einen zu der jeweiligen Führungsstange 5, 6 radial gerichteten und mit dieser beispielsweise verschraubten Anschlag 27, 28 drücken, und die auch in dieser Stellung der Zusatzteil 22 und der Zylinderteil 20 axial zusammenfügen.

Dem in seiner Achsrichtung verstellbaren Brühzylinder 2 sind zwei relativ zueinander verstellbare Kolben 31, 32 koaxial zugeordnet. Der erste, im wesentlichen feststehende Kolben 31 ist zweiteilig ausgebildet. Während ein Kolbenteil 33 ortsfest im Halter 7 befestigt ist, ist der andere Kolbenteil 34 diesem gegenüber leicht axialbeweglich und an diesem federnd abgestützt. Zwischen den beiden Kolbenteilen 33, 34 ist eine Druckfeder 35 angeordnet. Die beiden Kolbenteile 33, 34 sind an ihrem Umfang durch eine ringförmige mit einem U-förmigen Querschnitt versehene Dichtung 37 miteinander verbunden, die mit ihren Enden rundum an beiden Kolbenteilen 33, 34 befestigt ist. Die Druckfeder 35 ist bestrebt, die beiden Kolbenteile 33, 34 auseinanderzudrücken und dabei die Dichtung 37 länglich zu dehnen. Beim Andrücken des beweglichen Kolbenteils 34 an den ortsfesten Kolbenteil 33, entgegen der Kraft der Druckfeder 35, wird die Dichtung 37 radial nach aussen gedrückt und somit in ihre dichtende Funktionsstellung gebracht. Der erste Kolben 31 verschliesst hierbei das stirnseitig offene Ende des Brühzylinders 2.

Der zweite Kolben 32 ist verschiebbar im Brühzylinderteil 20 geführt. Am Umfang dieses Kolbens 32 ist eine ringförmige Dichtung 38 vorhanden. Der zweite Kolben 32 ragt mit seiner Kolbenstange 40 aus dem Brühzylinderteil 20 durch einen stirnseitigen Brühzylinder-Endteil 39 hindurch. Die Kolbenstange 40 ist an ihrem Ende mit einem eine Umfangsnut 42 aufweisenden Kopf 41 vorzugsweise aus Kunststoff versehen, mit dem sie in eine am Halter 8 angebrachte Halterung 43 einrastbar ist. Die Halterung 43 weist mit der Umfangsnut 42 zusammenwirkende stabförmige Federelemente 44 auf, die im wesentlichen tangential zu der Umfangsnut 42 verlaufen, und die beim Einrasten auseinanderdrückbar sind. Selbstverständlich wäre auch eine andere Rastvorrichtung denkbar. In der in Fig. 3 gezeigten Stellung befindet sich der zweite Kolben 32 beim Endteil 39 und die Kolbenstange 40 ist in der Halterung 43 eingerastet.

In der in Fig. 3 gezeigten Ausgangsstellung der Extraktionsvorrichtung 1 kann das gemahlene Kaffeepulver durch die seitliche, mit einer Kaffeemühle verbundene Einfüllöffnung 24 in den Brühzylinder 2 eingefüllt werden. Mit Vorteil können im Zusatzteil 22 zwei gegenüberliegende und mit je einer Mühle korrespondierende seitliche Einfüllöffnungen 24 vorgesehen sein.

Nachdem eine definierte Portion von Kaffeepulver in den durch die beiden Kolben 31, 32, den Brühzylinder 2 und den Zusatzteil 22 begrenzte Kammer eingebracht worden ist, wird nun der Schlitten 3 mit dem Brühzylinderteil 20 mittels der Antriebsvorrichtung 4 in Pfeilrichtung A nach Fig. 3 in Bewegung gesetzt, wobei auch der am Zylinderteil 20 anliegende Zusatzteil 22 mit dem Führungsteil 23 mitbewegt und dabei von den in den Führungsstangen 5, 6 integrierten Federn 25, 26 an den Brühzylinderteil 20 angedrückt verbleibt. Der Zylinderteil 20 sowie der Zusatzteil 22 werden über den ersten Kolben 31 (unter Zusammendrückung seiner beiden Kolbenteile 34, 33) in eine aus Fig. 4 ersichtliche Stellung geschoben. Vom sich in Pfeilrichtung A bewegenden Brühzylinder 2 wird aber auch der zweite Kolben 32 unter Ausrastung des Kopfes 41 aus der Halterung 43 mitgenommen und bis zu einem bestimmten Abstand gegen den feststehenden ersten Kolben 31 hin bewegt. Dadurch wird die Kammer mit dem Kaffeepulver bis zu einem vorbestimmten Mass verkleinert und das Kaffeepulver zusammengepresst bzw. verdichtet.

In dieser in Fig. 4 dargestellten Brühposition kann der eigentliche Brühvorgang durchgeführt werden, indem durch den einen Kolben (beispielsweise durch Kanäle 32' des zweiten Kolbens 32) brühendes Wasser oder Dampf in den durch Dichtungen 37, 38 abgedichteten Hohlraum und durch das Kaffeepulver gepumpt und der erzeugte Kaffee durch den anderen Kolben (beispielsweise durch Kanäle 31' des ersten Kolbens 31) zu einem aus der Zeichnung nicht ersichtlichen Auslass der Kaffeemaschine befördert wird.

Nach Beendigung des Brühvorganges wird mittels der Antriebsvorrichtung 4 der Schlitten 3 mit dem Brühzylinderteil 20 in der anderen Richtung (Pfeilrichtung B nach Fig. 4) in Bewegung gesetzt. Der mit dem Führungsteil 23 verbundene Zusatzteil 22 bleibt anfänglich an den Brühzylinderteil 20 angedrückt und wird unter Wirkung der Feder 25, 26 mit diesem zurückbewegt, bis der Führungsteil 23 an den mit den Führungsstangen 5, 6 verbundenen Anschlägen 26, 27 zur Anlage kommt. Nun wird der stehengebliebene, mit der Einfüllöffnung 24 (bzw. den Einfüllöffnungen 24) versehene Zusatzteil 22 von dem sich weiter mit dem Schlitten 3 in Pfeilrichtung B bewegenden Brühzylinderteil 20 getrennt und dadurch ein Axialspalt zwischen diesen beiden Teilen gebildet. Mit dem Brühzylinderteil 20 wird auch der zweite Kolben 32 in Pfeilrichtung B verstellt, bis der Kopf 41 wieder in die Halterung 43 einrastet. Da aber der Brühzylinderteil 20 mit dem Schlitten 3 weiter in Pfeilrichtung B zum Halter 8 hin bewegt wird, bis eine Stirnfläche 46 des Brühzylinder-Endteils 39 an einer Gegenfläche 47 des in der Halterung 43 eingerasteten Kopfes 41 zur Anlage kommt (vgl. Fig. 5), findet eine Relativbewegung zwischen dem zweiten Kolben 32 und dem Brühzylinderteil 20 statt, und die verbrauchte Kaffeeportion bzw. der Kaffeesatz wird durch den zweiten Kolben 32 aus dem Brühzylinderteil 20 in den Axialspalt zwischen den Teilen 20, 22 ausgestossen und fällt in einen darunterliegenden Auffangbehälter (in der Zeichnung nicht dargestellt).

Mit der erfindungsgemässen Aufteilung des Brühzylinders 2 in den entlang einer Längsführung (Führungsstangen 5, 6) geführten Zylinderteil 20 und in den Zusatzteil 22, von denen der eine den eigentlichen, die Brühkammer umschliessenden und durch die Antriebsvorrichtung 4 verstellbaren Brühzylinderteil 20 bildet und der Zusatzteil 22 mit der Einfüllöffnung 24 zum Einfüllen des Kaffeepulvers versehen ist, wobei sie beim Verstellen des Brühzylinderteils 20 in der einen Richtung A stirnseitig aneinandergedrückt zusammenverstellt und beim Verstellen des Brühzylinderteils 20 in der anderen Richtung B voneinander getrennt werden können, so dass ein Axialspalt entsteht, durch welchen das verbrauchte Kaffeepulver ausgestossen werden kann, kann die Länge des Brühzylinders 2 sowie auch der zum Ausstossen des verbrauchten Kaffeepulvers notwendige Hub des zweiten Kolbens 32 verkürzt werden, wodurch auch die Gesamtlänge der Extraktionsvorrichtung 1 verkleinert wird.

Ausserdem wird der Ausstossvorgang verkürzt, und nicht zuletzt auch das Material für die verkürzten Teile eingespart. Zudem kann der die Einfüllöffnung 24 aufweisende, am eigentlichen Brühvorgang unbeteiligte Zusatzteil 22 aus einem billigeren Material wie Kunststoff und in einem einfacheren Verfahren hergestellt werden als der aus rostfreiem Stahl bestehende Brühzylinderteil, in dem nun keine seitliche Einfüllöffnung angefertigt werden muss.

Selbstverständlich wären auch andere Ausführungsformen der erfindungsgemässen Extraktionsvorrichtung durchaus denkbar. So könnte z.B. eine alternative Antriebsvorrichtung als in der Zeichnung dargestellt Anwendung finden.

Die Verwendung eines DC-Motors in der Art eines Schrittmotors ermöglicht eine sehr genaue und wiederholbare Positionseinstellung mit gleichbleibendem Anpressdruck, gleichbleibender Kaffeesatzportion, die ausgestossen werden muss, etc.

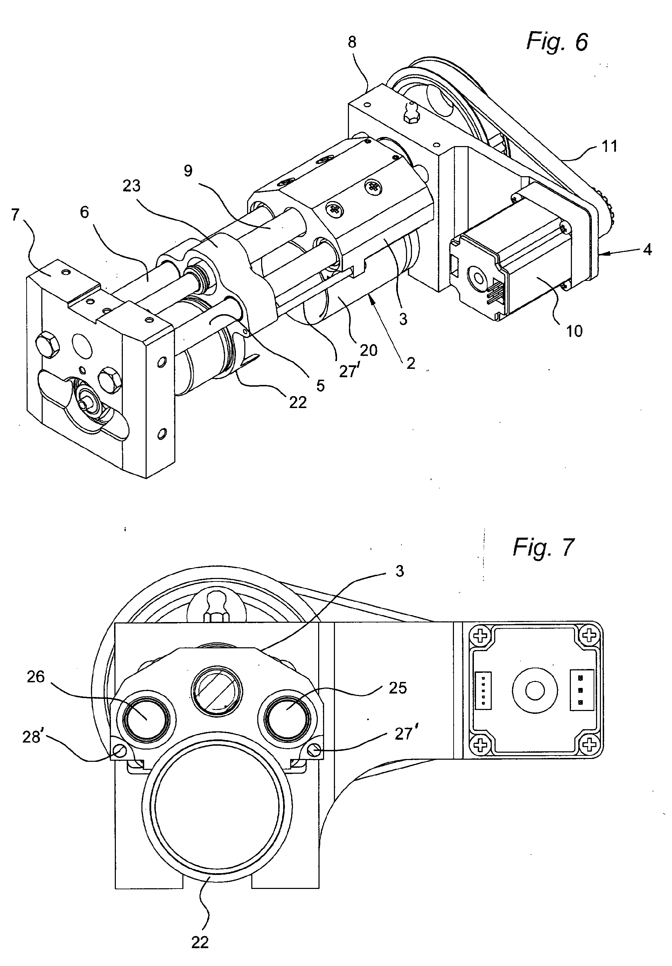

Gemäss Fig. 6 und Fig. 7 kann für das Einbringen des Kaffeepulvers anstelle der Mittel zum stirnseitigen Aneinanderdrücken des Zylinderteils 20 mit dem Zusatzteil 22 durch mindestens eine Feder 25, 26 auch nur ein Anliegen des Zylinderteils am Zusatzteil vorgesehen sein.

Die gleich ausgebildeten Teile wie diejenigen der Extraktionsvorrichtung gemäss Fig. 1 bis Fig. 5 sind mit denselben Bezugszeichen versehen und nachfolgend nicht mehr im Detail erläutert.

Der zylinderförmige Zusatzteil 22 ist beim Einfüllen von Kaffeepulver auf der einen Seite mit dem Brühzylinder 2 in Anschlag, wie dies in Fig. 3 veranschaulicht ist, gegenüberliegend umschliesst er den Kolben 31, so dass eine Kammer gebildet ist. Sodann kann der von einer nicht näher gezeigten Mühle gemahlene Kaffee durch die Einfüllöffnung 24 im Zusatzteil 22 in diese gebildete Kammer gebracht werden.

Anschliessend wird analog ,wie ebenfalls aus Fig. 3 ersichtlich ist, der Zylinderteil 20 und mit ihm der Kolben 32 weiter gegen den feststehenden Kolben 31 hin geschoben, bis der Zylinderteil 20 diesen Kolben 31 umschliesst. Gleichzeitig wird der Zusatzteil 22 in die gleiche Richtung mitbewegt, bis er auf der Hinterseite des Kolbens zu liegen kommt. In dieser Position wird das Kaffeepulver zu einem Kuchen gepresst und anschliessend das heisse Wasser zur Erzeugung des Kaffees durch die Kolben gedrückt.

Nach Beendigung des Brühvorganges wird vorerst der Zylinderteil 20 vom Kolben 31 zurückgezogen. Nach einer gewissen Strecke wird auch der Kolben 32 und durch die Zuordnung von parallel zu den Führungsstangen 5, 6 angeordneten Gleitstäben 27', 28' und entsprechenden Anschlägen auch der Zusatzteil 22 bis zur Einfüllposition, d.h. an die Vorderseite des Kolbens 31 (siehe dazu Fig. 5), gezogen. Sobald der Zylinderteil 20 die Endposition bei der Halterung 8 erreicht hat, wird der Kaffeekuchen durch den Kolben 32 ausgestossen.

Damit ist eine einfache Lösung in Bezug auf die Verstellung des Zusatzteils 22 erzielt worden, ohne dass betriebliche Nachteile entstehen würden.

## Patentansprüche

1. Extraktionsvorrichtung zur Erzeugung von Kaffee für eine Kaffeemaschine, mit einem durch eine Antriebsvorrichtung (4) verstellbaren und einen Zylinderteil (20) aufweisenden Brühzylinder (2) zur Aufnahme von Kaffeepulver, der in seiner Achsrichtung in Zusammenwirkung mit der Antriebsvorrichtung (4) zwischen vorbestimmten Stellungen hin und her verstellbar ist, mit zwei zum Brühzylinder (2) relativ zueinander verstellbaren Kolben (31, 32), und mit einem wenigstens eine Einfüllöffnung (24) zum Einfüllen des Kaffeepulvers versehenen Zusatzteil (22), welcher in der Einfüllposition am Zylinderteil (20) stirnseitig anliegt, indessen sie in der Ausstossposition voneinander getrennt sind zur Bildung eines Axialspaltes zur Entfernung des verbrauchten Kaffeepulvers, wobei in der Brühposition der beim Zusatzteil (22) befindliche Kolben (31) innerhalb des Zylinderteils (20) zu liegen kommt, **dadurch gekennzeichnet, dass** der Zusatzteil (22) mit der wenigstens einen Einfüllöffnung (24) verschiebbar angeordnet ist, wobei er in der Einfüllposition den Kolben (31) umschliesst und zusammen mit dem Zylinderteil (20) und dem Kolben (31, 32) eine Kammer bildet.

2. Extraktionsvorrichtung nach Anspruch 1, **dadurch gekennzeichnet, dass** das Hin- und Herschieben des Zusatzteils (22) durch den Brühzylinder (2) allein oder durch ihn und durch zusätzliche Mittel erfolgt.

3. Extraktionsvorrichtung nach Anspruch 1 oder 2, **dadurch gekennzeichnet, dass** der durch die Antriebsvorrichtung (4) verstellbare Brühzylinderteil (20) an einem auf zwei seitlichen Führungsstangen (5, 6) geführten und mittels einer Antriebsspindel (9) verstellbaren Schlitten (3) befestigt ist, wobei auch der Zusatzteil (22) mit einem Führungsteil (23) auf den Führungsstangen (5, 6) verschiebbar geführt ist.

4. Extraktionsvorrichtung nach Anspruch 2, **dadurch gekennzeichnet, dass** die Mittel zum Verschieben und für ein stirnseitiges Aneinanderdrücken des Zylinderteils (20) gegen den Zusatzteil (22) durch mindestens eine Feder (25, 26) gebildet sind, wobei der Zusatzteil (22) in der einen Richtung (A) vom durch die Antriebsvorrichtung (4) verstellbaren Zylinderteil (20) entgegen der Kraft der Feder (25, 26) verstellbar und in der anderen Richtung (B) durch die Kraft der Feder (25, 26) bis zu einem Anschlag (27, 28) zurückbewegbar ist.

5. Extraktionsvorrichtung nach einem der Ansprüche 1 bis 4, **dadurch gekennzeichnet, dass** der erste Kolben (31) zweiteilig ausgebildet und einen gegenüber einem ortsfesten Kolbenteil (33) federnd abgestützten beweglichen Kolbenteil (34) aufweist, wobei die beiden Kolbenteile (33, 34) auf ihrem Umfang durch eine ringförmige, im Querschnitt U-förmige Dichtung (37) miteinander verbunden sind und die Dichtung (37) beim Andrücken des beweglichen Kolbenteils (34) an den ortsfesten Kolbenteil (33) radial auseinanderdrückbar und somit in ihre dichtende Funktionsstellung bringbar ist.

6. Extraktionsvorrichtung nach einem der Ansprüche 1 bis 5, **dadurch gekennzeichnet, dass** der zweite Kolben (32) mit seiner aus dem Brühzylinderteil (20) hinausragenden Kolbenstange (40) in eine ortsfeste Halterung (43) einrastbar und dadurch zum sich weg vom Zusatzteil (22) bewegenden Brühzylinderteil (20) relativ zum Axialspalt hin bewegbar ist.

7. Extraktionsvorrichtung nach Anspruch 6, **dadurch gekennzeichnet, dass** die Kolbenstange (40) mit einem eine Umfangsnut (42) aufweisenden Kopf (41) versehen ist, mit dem sie zwischen zwei in die Umfangsnut (42) einrastbare, tangential zur Umfangsnut (42) verlaufende, stabförmige Federelemente (44) der Halterung (43) einsteckbar ist.

8. Extraktionsvorrichtung nach einem der Ansprüche 1 bis 6, **dadurch gekennzeichnet, dass** nach Beendigung des Brühvorganges der Zylinderteil (20) zurück verschiebbar ist, und dass nach einer vorbestimmten Strecke auch der Kolben (32) und durch die Zuordnung von parallel zu den Führungsstangen (5, 6) angeordneten Gleitstäben (27', 28') und entsprechenden Anschlägen auch der Zusatzteil (22) bis zur Einfüllposition verschiebbar ist.

9. Extraktionsvorrichtung nach einem der Ansprüche 1 bis 8, **dadurch gekennzeichnet, dass** die Antriebsvorrichtung einen Schrittmotor umfasst.

10. Extraktionsvorrichtung nach einem der Ansprüche 1 bis 8, **dadurch gekennzeichnet, dass** die beiden Kolben (31, 32) Kanäle (31', 32') aufweisen, wobei über die Kanäle (31' bzw. 32') des einen Kolbens (31 bzw. 32) in die durch die Kolben (31, 32) stirnseitig begrenzte Brühkammer und in das verdichtete Kaffeepulver brühendes Wasser oder Dampf unter Druck zuführbar ist und durch die Kanäle (32' bzw. 31') des anderen Kolbens (32 bzw. 31) der erzeugte Kaffee zu einem Auslass der Kaffeemaschine förderbar ist.

11. Extraktionsvorrichtung nach einem der Ansprüche 1 bis 9, **dadurch gekennzeichnet, dass** der mit der Einfüllöffnung (24) versehene Zylinderteil (22) aus Kunststoff besteht.

12. Extraktionsvorrichtung nach Anspruch 1 oder 2, **dadurch gekennzeichnet, dass** nach Beendigung des Brühvorganges ein Verschieben des Zylinderteils (20) vom Kolben (31) weg erfolgt, und durch die Zuordnung von parallel zu den Führungsstangen (5, 6) angeordneten Gleitstäben (27', 28') und entsprechenden Anschlägen auch ein Verschieben des Zusatzteils (22) bis zur Einfüllposition, d.h. an die Vorderseite des Kolbens (31), erfolgt.
